Europäisches Patentamt

European Patent Office

Office européen des brevets

(19)

(11) Veröffentlichungsnummer: **0 156 443**
**B1**

(12) ## EUROPÄISCHE PATENTSCHRIFT

(45) Veröffentlichungstag der Patentschrift:
**16.08.89**

(51) Int. Cl.⁴: **G 11 B 15/675**, G 11 B 33/02

(21) Anmeldenummer: **85200458.9**

(22) Anmeldetag: **25.03.85**

(54) Abdeckklappe an einem Magnetband-Kassettengerät.

(30) Priorität: **28.03.84 DE 3411389**

(43) Veröffentlichungstag der Anmeldung:
**02.10.85 Patentblatt 85/40**

(45) Bekanntmachung des Hinweises auf die Patenterteilung:
**16.08.89 Patentblatt 89/33**

(84) Benannte Vertragsstaaten:
**DE FR GB**

(56) Entgegenhaltungen:
**EP-A- 0 114 246**
**EP-A- 0 131 346**
**WO-A-83/04132**
**DE-A- 3 026 432**
**FR-A- 2 360 958**
**FR-A- 2 387 492**
**FR-A- 2 540 661**
**US-A- 3 800 328**
**US-A- 4 156 260**

**PATENTS ABSTRACTS OF JAPAN, Band 5, Nr. 38 (P-52)
[710], 12. März 1981; & JP - A - 55 160 356 (SHARP
K.K.)13-12-1980**

(73) Patentinhaber: **Philips Patentverwaltung GmbH,
Wendenstrasse 35 Postfach 10 51 49,
D-2000 Hamburg 1 (DE)**

(84) Benannte Vertragsstaaten: **DE**

(73) Patentinhaber: **N.V. Philips' Gloeilampenfabrieken,
Groenewoudseweg 1, NL-5621 BA Eindhoven (NL)**

(84) Benannte Vertragsstaaten: **FR GB**

(72) Erfinder: **Wieczorek, Willibald, Schönwasserstrasse 39,
D-4150 Krefeld (DE)**

(74) Vertreter: **Kupfermann, Fritz-Joachim, Dipl.-Ing. et al,
Philips Patentverwaltung GmbH
Wendenstrasse 35 Postfach 10 51 49,
D-2000 Hamburg 1 (DE)**

## Beschreibung

Die Erfindung bezieht sich auf eine Abdeckklappe an einem Magnetband-Kassettengerät zum zugriffsicheren Abdecken des Einschieb-/Auswurfschlitzes an der Vorderseite des Gerätes, wobei eine Kassettenaufnahme mittels einer Hebevorrichtung zwischen einer oberen Kassettenwechselstellung und einer unteren Arbeitsstellung verstellbar ist, wobei die Abdeckklappe an ihren beiden Längsenden mit längs der Seitenwände des Gerätes zurückspringenden Tragarmen versehen ist, die an diesen Seitenwänden drehbar angelenkt sind, und wobei das Verstellen der Klappe mittels eines Führungsstiftes erfolgt, der eine Kupplung bildet zwischen der Abdeckklappe und der Kassettenaufnahme.

Eine solche Abdeckklappe ist aus der J P-A-55 160 356 bekannt. In komplizierteren Kassettengeräten, beispielsweise Magnetbandgeräten für Video-Kassetten, kann bei diesen Kassetten das Magnetband nicht direkt im Bandzug von Wickel zu Wickel abgespielt werden. Aufgrund der Besonderheiten des Abtastverfahrens, bei dem Magnetköpfe auf einer rotierenden Kopfscheibe umlaufen, muss das Band in eine bestimmte geometrische Position ausserhalb der Kassette gezogen werden. Es umschlingt dabei die die Magnetköpfe tragende Kopfscheibe. Die Bandführung erfordert eine grosse Präzision, und es kann deshalb nicht dem Benutzer überlassen bleiben, die Kassette aus der Einfädelstellung aus der Ein- und Ausfädelmechanik und damit aus dem Gerät zu entnehmen. Zur Entnahme ist eine motorisch getriebene Kassettenhebevorrichtung vorgesehen, die die in einer Kassettenaufnahme aufgenommene Kassette aus der Arbeitsstellung in die Auswurfstellung hebt und aus dieser Auswurfstellung wieder in die Arbeitsstellung zurückführt.

Die Kassettenaufnahme hat an der Gerätvorderseite einen Schlitz, der etwa dem Querschnitt einer Kassette entspricht. Der Schlitz hat im allgemeinen eine solche Breite, dass in das Laufwerk eingegriffen werden kann. Es ist deshalb notwendig, wenn die Hebevorrichtung die Kassettenaufnahme in die Arbeitsstellung abgesenkt hat.

Aus der US-A-4 368 495 ist es bekannt, den Schlitz eines Plattenspielers mittels einer Klappe zu verschliessen, die an ihren beiden Längsenden mit längs der Seitenwände des Gerätes zurückspringenden Tragarmen versehen ist. Die Tragarme sind gelenkig am Gerät angeordnet, wodurch die Klappe vor den Schlitz oder vom Schlitz weg schwenkbar ist. Das Schwenken der Klappe erfolgt mittels eines Führungsstiftes, der eine Kupplung zwischen der Klappe und der auf- und abfahrbaren Kassettenaufnahme bildet. Der Führungsstift wirkt über einen Stellhebel auf die Klappe ein.

Es ist Aufgabe der Erfindung, eine Bewegungssteuerung für eine den Aufnahmeschlitz eines Kassettengerätes abdeckende Abdeckklappe zu schaffen, die platzsparend und einfach ausgebildet ist.

Die gestellte Aufgabe ist erfindungsgemäss dadurch gelöst, dass längs der Unterkanten wenigstens eines der Tragarme eine elastische Zunge vorgesehen ist, die mit der ihr zugeordneten Unterkante einen Führungsschlitz bildet, in den der Führungsstift der Kassettenaufnahme derart eingreift, dass der Führungsstift beim Absenken und Anheben der Kassettenaufnahme durch Nieder- und Hochfahren der Klappe verschwenkt.

Der Führungsstift, der in dem Führungsschlitz gleitet, zieht beim Absenken der Kassettenaufnahme in die Arbeitsstellung die Abdeckklappe vor den Beschickungsschlitz des Gerätes und kippt die Klappe beim Anheben nach oben, wodurch der Schlitz freigegeben wird. Der Führungsstift allein sorgt für das Schwenken der Klappe. Durch die elastische Ausbildung der Zunge wird verhindert, dass die Klappe bei unsachgemässer Bedienung zerstört wird.

Nach einer weiteren Ausgestaltung der Erfindung ist vorgesehen, dass an dem Zungenende ein Widerhaken vorgesehen ist, der den Führungsstift daran hindert, aus dem Führungsschlitz herauszulaufen. Darüber hinaus verhindert der Widerhaken ein gewaltsames Hochreissen der Abdeckklappe.

Die Erfindung wird anhand des in der Zeichnung dargestellten Ausführungsbeispiels näher erläutert. Es zeigen:

Fig. 1 bei einem Magnetband-Kassettengerät die mittels einer Kassettenaufnahme in eine Arbeitsstellung gebrachte Kassette zusammen mit der zugehörigen Hebevorrichtung und einer Abdeckklappe, die den Einführschlitz der Kassette in das Gerät schliesst,

Fig. 2 das Gerät nach Fig. 1 bei angehobener Kassettenaufnahme und nach oben weggeschwenkter Abdeckklappe,

Fig. 3 und 4 eine Auswurfverriegelungsvorrichtung in der Bewegungsphase der Entriegelung und in der Stellung der Verriegelung,

Fig. 5 eine Draufsicht auf das Gerät mit einer Draufsicht auf den Funktionsmechanismus der Abdeckklappe.

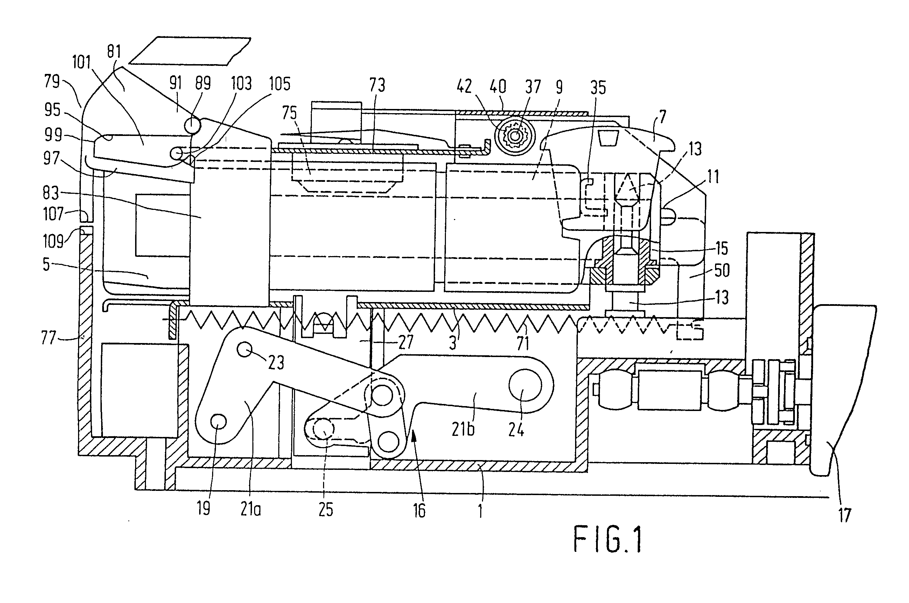

In einem Gehäuse 1 eines Magnetband-Kassettengerätes befindet sich eine Kassettenaufnahme 3, in die eine Kassette 5 eingeschoben ist. Bei dem Ausführungsbeispiel handelt es sich um eine Video-Kassette mit einem wegschwenkbaren Verschlussdeckel 7 und einem auf dem Kassettengehäuse zurückschiebbaren Kassettenschieber 9. Bei der Darstellung nach Fig. 1 sind in den Kopf 11 der Kassette im Bereich des Verschlussdeckels zwei Zentrierstifte 13 eingeschoben. Auf diese Weise ist die Kassette 5 in ihrer Arbeitsstellung im Gerät festgelegt. Das Video-Band 15 ist in der Spielstellung mittels einer nicht dargestellten Ein- und Ausfädelmechanik um eine nicht dargestellte Kopfplatte mit einer rotierbaren Kopfscheibe mit Magnetköpfen gezogen. Die Ein- und Ausfädelmechanik ist nicht näher beschrieben, da sie im hier betrachteten Zusammenhang ohne Bedeutung ist.

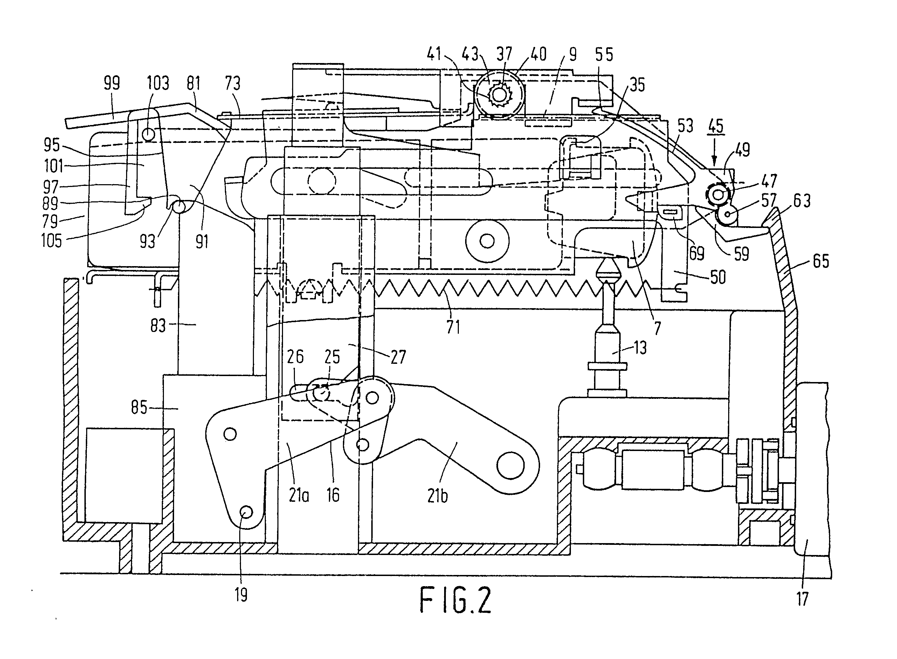

Die Kassettenaufnahme 3 kann mit Hilfe einer Hebevorrichtung 16 aus der Arbeitsstellung nach Fig. 1 in eine Auswurf- und Einzugsstellung nach Fig. 2 verschoben werden. Diese Hebevorrichtung 16 besteht aus einem Steuermotor 17, der eine nicht dargestellte Steuerscheibe antreibt. Eine Kontur dieser nicht dargestellten Steuerscheibe wird von einem gleichfalls nicht dargestellten Fühlhebel mittels eines Fühlstiftes abgefahren. Eine zwischen dem Fühlstift und dem Drehpunkt des Fühlhebels gelenkig angebrachte Stellstange greift mit ihrem anderen Ende an einen Lifthebel an, und zwar zwischen seinem Schwenklager und einem freien Ende. Das freie Ende dieses Lifthebels greift mit einem Liftstift 19 an zwei Hubhebeln 21a und 21b an, die um Drehpunkte 23, 24 schwenkbar sind.

Das Gelenksystem aus den beiden miteinander gekuppelten Hubhebeln 21a und 21b greift mit einem Hubstift 25 in Nuten 26 von Hubstangen 27 ein.

Der Steuermotor 17 kann somit über die nicht dargestellte Steuerscheibe und die Hubhebel 21a und 21b sowie die Hubstangen 27 die Kassettenaufnahme 3 anheben. Dabei ziehen sich die Zentrierstifte 13 aus der Kassette heraus, wie dies aus Fig. 2 zu erkennen ist und wodurch ein Auswurf der Kassette 5 möglich ist.

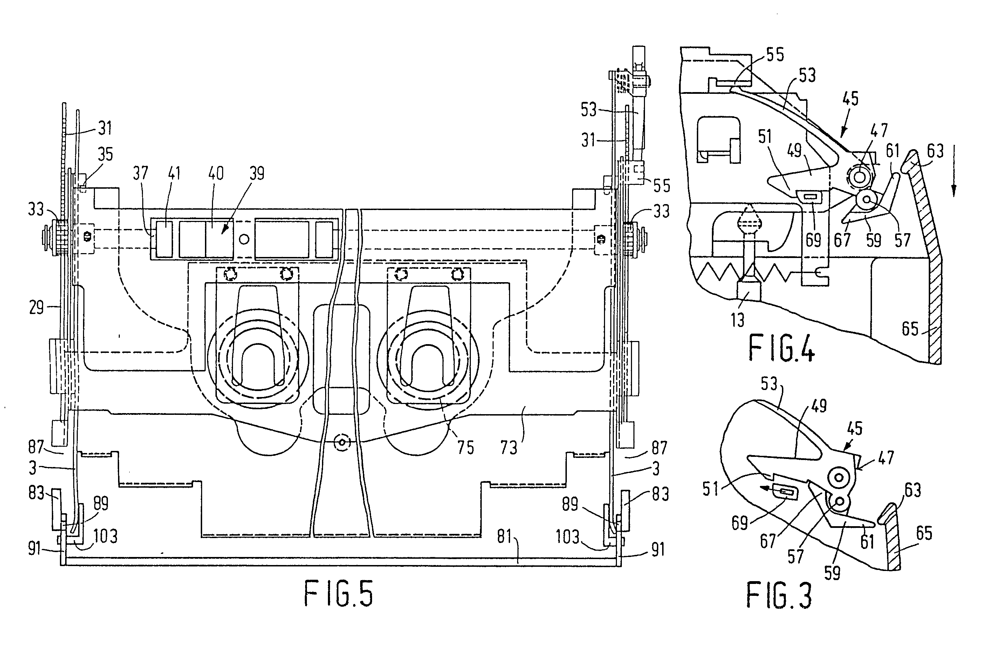

Beiderseits der rahmenförmigen Kassettenaufnahme 3 sind Schieber 29 angeordnet, die in Auswurfrichtung hin und her verfahrbar sind. Aus Fig. 5 ist zu erkennen, dass die beiden Schieber 29 mit Zahnungen 31 versehen sind, die mit Zahnrädern 33 kämmen. Die Schieber 29 greifen mittels Mitnehmerzapfen 35 in den Innenraum der Kassettenaufnahme 3 ein und können dabei hinter den Kassettenschieber 9 greifen, wie aus Fig. 2 zu ersehen ist. Die Zahnräder 33 sind über eine Welle 37 miteinander verbunden (Fig. 5).

Auf der Welle 37 ist eine Reibungsbremse 39 angeordnet, die aus einer Bremshülse 40 und einem an der Bremshülle 40 angeordneten Ratschenzahnrad 41 besteht. Mit dem Ratschenzahnrad 41 wirkt ein Ratschenfederblatt 43 zusammen (Fig. 2), das eine Drehung der Bremshülse 40 nur in einer Richtung zulässt. Zwischen Welle 37 und der Bremshülse 40 befindet sich ein bremsendes zähflüssiges Fett, beispielsweise Siliconfett.

An der Kassettenaufnahme 3 ist eine in den Fig. 2, 3 und 4 näher gezeigte Riegelvorrichtung 45 vorgesehen. Diese Riegelvorrichtung besteht aus einem um eine Achse 47 verschwenkbaren Klinkenhebel 49, der mit einer Ausklinkung 51 versehen ist. Der Klinkenhebel 49 besteht aus Kunststoff und ist mit einem angespitzten Federarm 53 ausgerüstet, der hinter eine Nase 55 der Kassettenaufnahme 3 drücken kann. Um eine neben der Achse 47 gelegene weitere Achse 57 ist ein doppelarmiger Kipphebel 59 verschwenkbar. Dieser Kipphebel nach Art einer hängenden Wippe kann, wenn er mit einem ersten Freiarm 61 gegen eine Auslösenase 63 eines Auslösearms 65 stösst, den Klinkenhebel 49 so weit verschwenken, dass der zweite Freiarm 67 den Klinkenhebel 49 nach oben drückt. Dadurch wird ein Riegel 69 freigegeben, und an Zughaken 50 der Schieber 29 angreifende Zugfedern 71 ziehen die Schieber 29 zusammen mit der Kassette 5 nach links aus der Kassettenaufnahme 3 heraus. Zusammen mit dem Nach-links-Verschieben der Schieber 29 ist auf nicht näher zu erläuternde Weise eine Andruckplatte 73 verschwenkt, so dass Andrücker 75 aus der Kassette herausgehoben wurden.

Beim Niederfahren der Kassettenaufnahme 3 stösst der erste Freiarm 61 wieder gegen die Auslösenase 63. Bei dieser Niederfahrbewegung kippt der Kipphebel 59 aber einfach weg, und der Klinkenhebel 49 wird nicht berührt.

Wird die Kassette 5 nach rechts in die Kassettenaufnahme 3 eingeschoben, dann verrastet der Riegel 69 hinter der Ausklinkung 51 des Klinkenhebels 49. Danach fährt die Kassettenaufnahme 3 nieder in die Stellung nach Fig. 1. Der Kipphebel 59 fährt an der Auslösenase 63 vorbei, und die Kassette 5 bleibt eingeschoben arretiert gehalten. Beim Niederfahren ist das Ratschenfederblatt 43 über die Zähne des Ratschenzahnrades 41 hinweggestrichen. Die Reibungsbremse 39 lief bei dieser Niederrückbewegung also leer.

Ist die Kassette abgespielt und soll sie ausgeworfen werden, dann wird durch Betätigung des Steuermotors 17 die Kassettenaufnahme 3 angehoben. Beim Anheben stösst der erste Freiarm 61 gegen die Auslösenase 63, und der zweite Freiarm 67 kippt den Klinkenhebel 49 nach oben. Der nun frei gewordene Riegel 69 erlaubt es, dass die Feder 71 die Kassette 5 mittels der Feder 71 auswirft. Diese Auswerfbewegung ist dadurch gebremst, dass nunmehr das Ratschenfederblatt 43 gegen einen Zahn des Ratschenzahnrades 41 stösst. Damit ist die Bremshülse 40 blockiert, und die Welle 37 wird mittels des Fettes zwischen der Bremshülse 40 und der Welle 37 abgebremst. Der Auswerfevorgang läuft damit stark gebremst ab.

An der Vorderseite 77 des Gehäuses 1 befindet sich ein Schlitz 79, der im Querschnitt etwa dem Querschnitt einer einzuschiebenden Kassette entspricht. Dieser Schlitz 79 ist mit Hilfe einer Abdeckklappe 81 abdeckbar. Diese Abdeckklappe 81 ist bei in Spielstellung abgesenkter Kassettenaufnahme vor den Schlitz 79 geschwenkt. Bei angehobener Kassettenaufnahme 3 ist die Abdeckklappe 81 nach oben und hinten weggeschwenkt, so dass der Schlitz 79 offen ist.

Die Abdeckplatte 81 ist schwenkbar an Stützen gelagert, die mit dem Rahmen 85 des Laufwerkes fest verbunden sind. Die Stützen 83, die an beiden Laufwerksseiten 87 angeordnet sind, tragen Zapfen 89. Die Abdeckklappe ist an beiden Längsenden mit längs der Laufwerksseitenwände 87 zurückspringenden Tragarmen 91 versehen, die mit Lageraugen 93 über die Zapfen 89 klippbar sind. Längs der Unterkante 95 der Tragarme 91 erstrecken sich elastische Zungen 97, die an der Klappenwand 99 befestigt sind. Der genaue Verlauf der elastischen Zungen 97 ergibt sich aus den Bewegungsverhältnissen beim Anheben und Absenken der Kassettenaufnahme 3. Zwischen den Unterkanten 95 der Tragarme und den elastischen Zungen 97 bilden sich dadurch Führungsschlitze 101 aus, in die an der Kassettenaufnahme befestigte Führungsstifte 103 eingreifen. Die Führungsstifte 103 sind in den Führungsschlitzen 101 verschiebbar.

Befindet sich die Kassettenaufnahme 3 in der in Fig. 1 dargestellten abgesenkten Stellung, dann liegen die Führungsstifte 103 in der Nähe der freien Enden der elastischen Zungen 97, an denen Widerhaken 105 vorgesehen sind. Die Klappenwand 99 steht in diesem Fall vertikal, und der untere Rand 107 der Klappe 81 liegt auf dem oberen Schlitzrand 109 der Gehäusewand 77 auf.

Wird die Kassettenaufnahme mit Hilfe des Liftes 16 angehoben, dann drücken die mit der Kassettenaufnahme hochfahrenden Führungsstifte 103 gegen die Unterkanten 95 der Tragarme 91, wodurch die Abdeckklappe 81 nach oben geschwenkt wird. In der höchsten Stellung, die in Fig. 2 dargestellt ist, liegt die Klappenwand 99 nahezu horizontal und die Führungsstifte 103 nahezu am Ende der Schlitze 101 in der Nähe der Klappenwand 99.

Bei der Stellung der Klappe nach Fig. 1 mit senkrecht stehender Klappenwand 99 kann es passieren, dass ein Benutzer die Klappe mutwillig hochreissen will. Dies verhindern aber die Widerhaken 105.

Die Verstellvorrichtung für die Abdeckklappe arbeitet mithin vollmechanisch und sehr betriebssicher.

## Patentansprüche

1. Abdeckklappe an einem Magnetband-Kassettengerät zum zugriffsicheren Abdecken des Einschieb-/Auswurfschlitzes an der Vorderseite des Gerätes (1), wobei eine Kassettenaufnahme (3) mittels einer Hebevorrichtung (16) zwischen einer oberen Kassettenwechselstellung und einer unteren Arbeitsstellung verstellbar ist, wobei die Abdeckklappe (81) an ihren beiden Längsenden mit längs der Seitenwände des Gerätes zurückspringenden Tragarmen (91) versehen ist, die an diesen Seitenwänden drehbar angelenkt sind, und wobei das Verstellen der Klappe (81) mittels eines Führungsstiftes (103) erfolgt, der eine Kupplung bildet zwischen der Abdeckklappe (81) und der Kassettenaufnahme (3), dadurch gekennzeichnet, dass längs der Unterkanten (95) wenigstens eines der Tragarme (91) eine elastische Zunge (97) vorgesehen ist, die mit der ihr zugeordneten Unterkante (95) einen Führungsschlitz (101) bildet, in den der Führungsstift (103) der Kassettenaufnahme (3) derart eingreift, dass der Führungsstift (103) beim Absenken und Anheben der Kassettenaufnahme (3) durch Nieder- und Hochfahren die Klappe (81) verschwenkt.

2. Abdeckklappe nach Anspruch 1, dadurch gekennzeichnet, das an dem Zungenende ein Widerhaken (105) vorgesehen ist, der den Führungsstift (103) daran hindert, aus dem Führungsschlitz (95) herauszulaufen.

## Claims

1. A cover on a magnetic-tape-cassette apparatus for closing the loading/ejection slot at the front of the apparatus (1) so as to inhibit access, a cassette holder (3) being movable between an upper cassette-replacement position and a lower operation position by means of a lifting device (16), which cover (81) carries supporting arms (91) which recede along the side walls of the apparatus and which are pivotally connected to said side walls, which cover (81) is actuated by means of a guide pin (103) which constitutes a coupling between the cover (81) and the cassette holder (3), characterized in that there is provided an elastic tongue (97) which extends along the lower edge (95) of at least one of the supporting arms (91) and in combination with the associated lower edge (95) forms a guide slot (101) in which the guide pin (103) of the cassette holder (3) engages in such a way that the guide pin (103) pivots the cover (81) by its downward and upward movement during lowering and lifting of the cassette holder (3).

2. A cover as claimed in Claim 1, characterized in that the end of the tongue carries a hook (105) which prevents the guide pin (103) from being disengaged from the guide slot (95).

## Revendications

1. Volet de protection sur un appareil à cassette de bande magnétique pour protéger l'accès à la fente d'introduction/éjection prévue dans la face avant de l'appareil (1), un compartiment à cassette (3) pouvant être déplacé à l'aide d'un dispositif élévateur (16) entre une position supérieure d'échange de cassette et une position inférieure de travail, le volet de protection (81) étant pourvu, à ses deux enxtrémités longitudinales, de bras de support (91) s'étendant vers l'arrière le long des parois latérales de l'appareil et montés à pivot sur ces parois latérales, et le déplacement du volet (81) s'effectuant à l'aide d'un ergot de guidage (103) qui forme un couplage entre le volet de protection (81) et le compartiment à cassette (3), caractérisé en ce que le clong dubord inférieure (95) d'au moins un des bras de support (91) est prévue une languette élastique (97) qui, avec le bord inférieur (95) qui lui et associé, forme une fente de guidage (101) dans laquelle l'ergot de guidage (103) du compartiment à cassette (3) est engagé d'une manière telle qu'en descendant ou en montant, lors de l'abaissement et de l'élévation du compartiment à cassette (3), cet ergot de guidage (103) fasse pivoter le volet (81).

2. Volet de protection suivant la revendication 1, caractérisé en ce que sur l'extrémité de la languette est prévue une barbe (105) qui empêche l'ergot de guidage (103) de sortir de la fente de guidage (95).

FIG.1

FIG.2

EP 0 156 443 B1

EP 0 156 443 B1

**FIG.5**

31
35
37 41 40 39
33
29
87
3
83 89
91 103
75 73
81
89 87
3
83
103 91

53
31
55
33

**FIG.4**

55
53
45
51
49
47
61
63
69 67 59 57
13
65

**FIG.3**

53
49
45
47
51
69
67 61
57 59
63
65